Europäisches Patentamt

European Patent Office

Office européen des brevets

(11) Veröffentlichungsnummer: **0 001 406**
A1

(12) **EUROPÄISCHE PATENTANMELDUNG**

(21) Anmeldenummer: **78100890.9**

(22) Anmeldetag: **14.09.78**

(51) Int. Cl.²: **E 21 B 9/35**, E 21 B 9/10, F 16 J 15/44

(30) Priorität: **29.09.77 DE 2743825**

(43) Veröffentlichungstag der Anmeldung: **18.04.79** Patentblatt 79/8

(84) Benannte Vertragsstaaten: **FR GB NL SE**

(71) Anmelder: **SKF KUGELLAGERFABRIKEN GMBH, Ernst-Sachs-Strasse 2-8, D-8720 Schweinfurt (DE)**

(72) Erfinder: **Hüber, Wolfgang, Ernst-Herrmann-Strasse 1 D-8720 Schweinfurt (DE)**
Erfinder: **Olschewski, Armin, Stösselstrasse 8, D-8720 Schweinfurt (DE)**

(74) Vertreter: **Glanz, Werner, Dipl.-Ing., Ernst-Sachs-Strasse 2-8, D-8720 Schweinfurt (DE)**

(54) **Rollenmeissel.**

(57) Bei einem Rollenmeißel mit Schneidrollen (1), die jeweils auf einem Zapfen (6) des Meißelkörpers (7) in einem Wälzlager drehbar gelagert sind, ist zwischen den Wälzkörpern (8) des Wälzlagers und dem Meißelkörper (7) ein Bordring (9) in der Bohrung der Schneidrolle (1) festgesetzt, der die Wälzkörper (8) auf einer Seite axial führt und der eine Dichtung trägt.

Zwecks Abdichtung des Lagerraumes bei in axialer Richtung gedrungen bauendem Rollenmeißel weist der Bordring (9) eine der Mantelfläche (17) des Zapfens (6) mit geringem Ringspalt gegenüberliegende Bohrungsfläche (10) auf, wobei die Dichtung aus mindestens einem in diesem Ringspalt angeordneten, radial spannenden Kolbenring (11) besteht.

SKF KUGELLAGERFABRIKEN GMBH    Schweinfurt, 4. 9.1978
TPA/vh.hb DT 77 028 DT

## Rollenmeißel

Die vorliegende Erfindung betrifft einen Rollenmeißel mit mehreren Schneidrollen, die jeweils auf einem Zapfen des Meißelkörpers in einem Wälzlager drehbar gelagert sind, wobei zwischen den Wälzkörpern des Wälzlagers und dem Meißelkörper ein die Wälzkörper axial nach einer Seite führender, eine Dichtung tragender Bordring in der Bohrung der Schneidrolle festgesetzt ist.

Durch die DT-AS 2 021 011 ist ein Rollenmeißel der angegebenen Gattung bekannt, bei dem zwischen dem in der Schneidrolle festgesetzten Bordring und dem Zapfen des

- 2 -

Meißelkörpers ein Gleitring mit Dichtungsring vorgesehen ist, dem ein meißelkörperseitig eingebauter Gleitring mit Dichtungsring, der in einem auf dem Zapfen aufgeschraubten Haltering befestigt ist, seitlich gegenüberliegt. Dieser Rollenmeißel hat den Nachteil, daß für die Dichtungselemente in axialer Richtung ein großer Bauraum benötigt wird, so daß der Zapfen relativ weit vom Meißelkörper kragend ausgebildet werden muß und das Wälzlager einen großen Abstand vom Meißelkörper einnimmt. Dementsprechend verursachen die Belastungskräfte der Schneidrollen ein ungünstig großes Biegemoment am Zapfen. Schließlich ist auch die Tragfähigkeit und Belastbarkeit der Schneidrolle ungenügend, weil sich der relativ lange Zapfen des Meißelkörpers bei großen Stoßbelastungen im Betrieb durchbiegt, so daß die Lager der Schneidrollen unter schädlicher Verkantung laufen und vorzeitig ausfallen. Die Gebrauchsdauer des bekannten Rollenmeißels ist also recht klein.

Aufgabe der vorliegenden Erfindung ist es, einen verbesserten Rollenmeißel zu schaffen, der in axialer Richtung gedrungen gebaut ist und bei dem die Schneidrollen bei einwandfreier Abdichtung des Lagerraumes eine große Tragfähigkeit und eine lange Gebrauchsdauer besitzen.

Diese Aufgabe wird erfindungsgemäß dadurch gelöst, daß der Bordring eine der Mantelfläche des Zapfens mit geringem Radialspalt gegenüberliegende Bohrungsfläche aufweist und daß die Dichtung aus mindestens einem in diesen Ringspalt zwischen Bordring und Zapfen angeordneten, radial spannenden Kolbenring besteht. Die axiale Bauhöhe der Schneidrolle wird durch den Bordring mit Dichtung nur geringfügig vergrößert. Bei eventueller Abnutzung des Wälzlagers im Betrieb und entsprechender Vergrößerung des radialen Lagerspiels im Wälzlager übernimmt der Bordring einen Teil der Lagerbelastung, indem die Bohrungsfläche des Bordringes auf der Mantelfläche des Zapfens gleitet. Gleichzeitig ist eine einwandfreie Abdichtung des Lagerraumes gegenüber der die Schneidrolle umgebenden Spülflüssigkeit gewährleistet, denn selbst bei verschleißbedingten Änderungen des Dicht- bzw. Gleitspaltes zwischen der Bohrungsfläche des Bordringes und der Mantelfläche des Zapfens ist eine ordentliche Dichtwirkung des oder der Kolbenringe gegeben, weil diese radial spannen und unabhängig vom Verschleiß der Sitzflächen in der Bohrungsfläche des Bordringes oder auf der Mantelfläche des Zapfens ordentlich festgehalten werden.

Nach einem besonderen Merkmal der Erfindung ist der Kolbenring in einer Ringnut des Zapfens angeordnet und liegt unter elastischer Vorspannung gegen die

- 4 -

Bohrungsfläche des Bordringes an. Dadurch drückt der Kolbenring elastisch gegen die Bohrungsfläche des Bordringes und wird durch Reibschluß im Bordring festgehalten. Der Kolbenring läuft im Betrieb mit dem in der betreffenden Schneidrolle eingebauten Bordring um. Dabei kann sich der Kolbenring in der Ringnut des Zapfens reibend eingraben und somit dauernd als Labyrinthdichtung wirken.

Nach einem weiteren Merkmal der Erfindung ist der Kolbenring aus einem Hartmetall, zum Beispiel Wolframkarbid, gefertigt.

Nach einem zusätzlichen weiteren Merkmal sind die Seitenflächen des Kolbenringes mit nach außen pumpenden Spiralrillen versehen, so daß dem Eindringen der Spülflüssigkeit in den Lagerraum entgegengewirkt wird. Von außen vorgedrungene Schlamm- und Verschleißpartikel werden in den Spiralrillen gefangen gehalten, so daß diese nicht weiter in Richtung des Lagerraumes eindringen können.

Nach einem Merkmal der Erfindung weist die dem Meißelkörper zugewandte Stirnfläche des Bordringes eine ringförmige Vertiefung auf, in die ein entsprechender Vorsprung des Meißelkörpers zur Bildung einer Labyrinthdichtung eingreift.

Der erfindungsgemäße Rollenmeißel ist in der folgenden Beschreibung zweier Ausführungsbeispiele, die in den Zeichnungen dargestellt sind, näher erläutert.

Es zeigen:

Fig. 1 einen teilweisen Querschnitt durch die Schneidrolle eines erfindungsgemäßen Rollenmeißels,

Fig. 2 eine vergrößerte Ansicht des mit A in Figur 1 bezeichneten Details, und

Fig. 3 einen teilweisen Querschnitt durch die Schneidrolle eines abgeänderten erfindungsgemäßen Rollenmeißels.

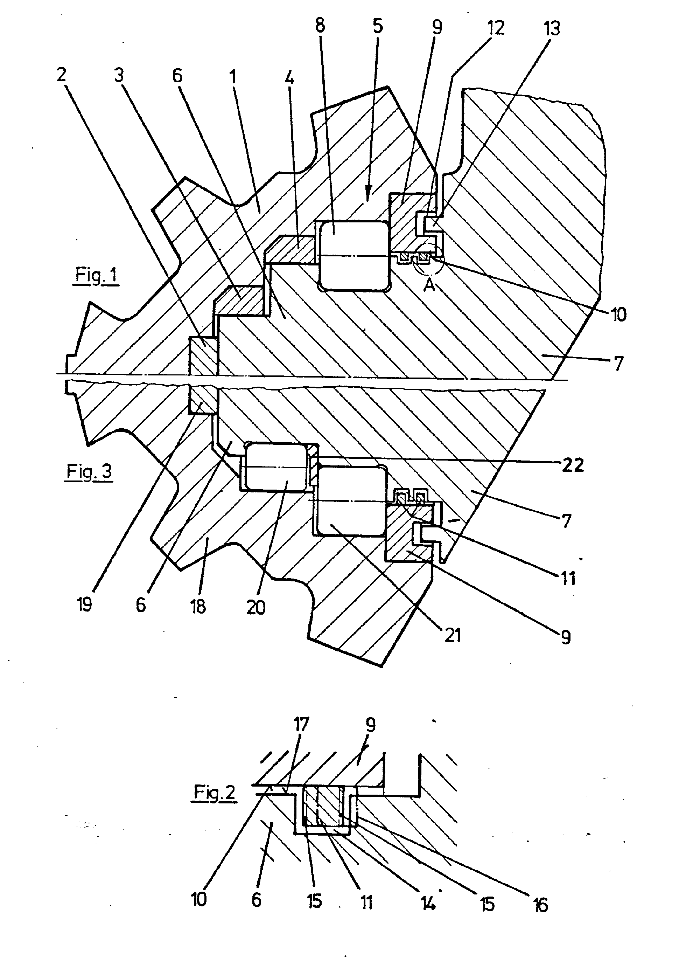

Mit 1 ist in Figur 1 die Schneidrolle eines Rollenmeissels bezeichnet, die über die Gleitlagereinsätze 2, 3 und 4 und über das Wälzlager 5 auf dem einstückigen Zapfen 6 des Meißelkörpers 7 drehbar gelagert ist. Dabei sind die zylindrischen Wälzkörper 8 des Wälzlagers 5 am meißelkörperseitigen Ende der Schneidrolle 1 angeordnet. Auf der dem Meißelkörper 7 zugewandten Seite sind die Wälzkörper 8 durch den Bordring 9 axial in einer Richtung geführt. Dieser Bordring 9 ist, zum Beispiel durch Schweißen, in der Bohrung der Schneidrolle 1 befestigt und weist eine der Mantelfläche 17 des Zapfens 6 mit geringem Ringspalt gegenüberliegende Bohrungsfläche 10 auf. In der Bohrungsfläche 10 des Bordringes 9 sitzen nebeneinander radial spannende Kolbenringe 11, die im Ringspalt zwischen Bordring 9 und Zapfen 6 angeordnet sind und radial außen gegen die Bohrungsfläche 10 mit elastischer Vorspannung anliegen und somit einen Reibschluß mit dieser Bohrungsfläche 10 bilden.

Auf seiner dem Meißelkörper 7 zugewandten Stirnfläche weist der Bordring 9 eine ringförmige Vertiefung 12 auf, in die der seitliche ringförmige Vorsprung 13 des Meißelkörpers 7 zur Bildung einer Labyrinthdichtung eingreift.

Wie in Figur 2 deutlich zu sehen, ist jeder Kolbenring 11 in einer Ringnut 14 des Zapfens 6 seitlich geführt. Auf den Stirnflächen der Kolbenringe 11 sind flache Spiralrillen 15 zum Beispiel durch Ätzen, eingearbeitet, welche bei der vorliegenden Drehrichtung der Schneidrolle 1 hydrodynamisch radial nach außen pumpend wirken und somit die bis zu den Kolbenringen vorgedrungene Spülflüssigkeit der Umgebung am Eindringen in den Lagerraum hindern.

Die Kolbenringe 11 können übrigens aus einem Hartmetall, zum Beispiel Wolframkarbid, gefertigt sein, so daß sie sich beim eventuellen reibenden Anlauf an den weicheren Seitenflächen der Ringnut 14 ohne Abnutzung eingraben und eine die Dichtwirkung vergrößernde Stufe 16 (siehe strichpunktierte Darstellung in Figur 2) bilden.

Im Betrieb können die Gleitlagereinsätze 2, 3 und 4 eventuell Abrieb erzeugen, die in das Wälzlager 5 eindringen und dort einen Verschleiß hervorrufen, so daß sich das radiale Lagerspiel (Lagerluft) allmählich vergrößert. In diesem Fall übernimmt der Bordring 9 einen Teil der radialen Belastung des Wälzlagers 5, weil die Bohrungsfläche 10 des Bordringes 9 der Mantelfläche 17 des Zapfens 6 eng gegenüberliegt und diese Bohrungsfläche 10 auf der Mantelfläche 17 zu gleiten anfängt. Gleichzeitig wird die tragende Stützlänge der Schneidrolle 1 vergrößert, so daß die Schneidrolle 1 auch bei etwaigem Verschleiß im Wälzlager 5 keine unzulässig großen Kippbewegungen ausführen kann.

In Figur 3 ist ein abgeänderter erfindungsgemäßer Rollenmeißel gezeigt, der Schneidrollen 18 besitzt, die über den Gleitlagereinsatz 19 und über die zylindrischen Wälzkörper 20 des inneren Wälzlagers und die an diesen seitlich anschließenden zylindrischen Wälzkörper 21 des äußeren, am meißelkörperseitigen Ende der Schneidrolle 18 angeordneten Wälzlagers auf dem einstückigen Zapfen 6 des Meißelkörpers 7 gelagert sind. Der Bordring 9 und die Kolbenringe 11 sind so wie beim oben beschriebenen Rollenmeißel der Figuren 1 und 2 konstruiert. Zwischen dem Wälzkörper 20 und den Wälzkörpern 21 ist eine Anlaufscheibe 22 lose eingelegt, die aus einem geeigneten Gleitlagerwerkstoff, zum Beispiel Bronze, gefertigt ist und selbst große axiale Führungskräfte der Wälzkörper 20 bzw. 21 ohne Schaden aufnehmen kann.

Der erfindungsgemäße Rollenmeißel hat den großen Vorteil, daß er in axialer Richtung gedrungen gebaut ist. Dabei besitzen die Schneidrollen des Rollenmeißels bei

0001406

- 8 -

dauernd einwandfreier Abdichtung eine große Tragfähigkeit und eine lange Gebrauchsdauer.

Die zwei beschriebenen Ausführungsbeispiele der Erfindung können im Rahmen des Erfindungsgedankens abgeändert werden. Zum Beispiel brauchen die Wälzkörper
nicht zylindrisch ausgebildet zu sein, vielmehr
können diese eine den Belastungen des Rollenmeißels
entsprechende, zum Beispiel kugelige, Form besitzen.
Die Kolbenringe brauchen nicht aus Hartmetall gefertigt zu sein. Vielmehr können diese aus einem
anderen geeigneten Werkstoff, zum Beispiel Gußbronze,
bestehen.

0001406

- 1 -

Patentansprüche:

1.  Rollenmeißel mit mehreren Schneidrollen, die jeweils auf einem Zapfen des Meißelkörpers in einem Wälzlager drehbar gelagert sind, wobei zwischen den Wälzkörpern des Wälzlagers und dem Meißelkörper ein die Wälzkörper axial in einer Richtung führender, eine Dichtung tragender Bordring in der Bohrung der Schneidrolle festgesetzt ist, dadurch gekennzeichnet, daß der Bordring (9) eine der Mantelfläche (17) des Zapfens (6) mit geringem Ringspalt gegenüberliegende Bohrungsfläche (10) aufweist, und daß die Dichtung aus mindestens einem in diesem Ringspalt zwischen Bordring (9) und Zapfen (6) angeordneten, radial spannenden Kolbenring (11) besteht.

2.  Rollenmeißel nach Anspruch 1, dadurch gekennzeichnet, daß der Kolbenring (11) in einer Ringnut (14) des Zapfens (6) angeordnet ist und unter elastischer Vorspannung gegen die Bohrungsfläche (10) des Bordringes (9) anliegt.

3.  Rollenmeißel nach Anspruch 1 oder 2, dadurch gekennzeichnet, daß der Kolbenring (11) aus einem Hartmetall, zum Beispiel Wolframkarbid, gefertigt ist.

- 2 -

0001406

- 2 -

4. Rollenmeißel nach einem der Ansprüche 1 bis 3, dadurch gekennzeichnet, daß die Seitenflächen des Kolbenringes (11) mit nach außen pumpenden Spiralrillen (15) versehen sind.

5. Rollenmeißel nach einem der vorhergehenden Ansprüche, dadurch gekennzeichnet, daß die dem Meißelkörper (7) zugewandte Stirnfläche des Bordringes (9) eine ringförmige Vertiefung (12) aufweist, in die ein entsprechender Vorsprung (13) des Meißelkörpers (7) zur Bildung einer Labyrinthdichtung eingreift.

Fig. 1

Fig. 3

Fig. 2

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | US - A - 3 467 448 (GALLE) -- | |
| | FR - A - 2 251 758 (NIPPON PISTON RING) <br> * Seite 1, Zeile 36 bis Seite 2, Zeile 16 * -- | 1,2 |
| | DE - B - 1 056 440 (HERBST) <br> * Patentanspruch 1 * -- | 1,2 |
| | DE - B - 1 247 097 (WIEMAN) <br> * Spalte 1, Zeilen 15-29 * -- | 1,2 |
| | US - A - 3 397 928 (GALLE) <br> * Spalte 3, Zeilen 7-12; Abbildung 1 * -- | 2 |
| | US - A - 3 193 028 (RADZIMOVSKY) <br> * Spalte 3, Zeilen 52-56; Abbildung 1 * -- | 5 |
| | US - A - 3 055 666 (MORENO) <br> * Spalte 3, Zeilen 15-30 * -- | 4 |
| | US - A - 3 466 052 (LUDWIG) <br> * Spalte 3, Zeile 71 bis Spalte 4, Zeile 9 * -- ./. | 4 |

**KLASSIFIKATION DER ANMELDUNG (Int.Cl.²)**

E 21 B 9/35
9/10
F 16 J 35/44

**RECHERCHIERTE SACHGEBIETE (Int. Cl.²)**

E 21 B 9/08
9/35
E 21 C 13/00
E 21 B 9/10
F 16 J 35/44
15/40
F 16 C 33/76
33/72

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 22-12-1978 | SOGNO |

EPA form 1503.1  06.78

| | EINSCHLÄGIGE DOKUMENTE | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| P | <u>US - A - 4 102 419</u> (KLIMA) | | |
| | | | |
| | | | **RECHERCHIERTE SACHGEBIETE (Int. Cl.²)** |
| | | | |